# EUROPEAN PATENT APPLICATION

(11) **EP 1 178 021 A1**
(43) Date of publication of application: **06.02.2002**
(21) Application number: 01306635.2
(22) Date of filing: 02.08.2001
(51) Int. Cl.: C03C 17/00

(54) **Resin film-coated recyclable glass bottles and method for producing the same**

(30) Priority: 04.08.2000 JP 2000236841
(71) Applicant: ISHIZUKA GLASS CO., LTD., Nagoya-shi, Aichi-ken (JP)
(72) Inventor: Nonogaki, Tomohiko, Kounan, Aichi (JP); Yamamoto, Satoshi, Aichi (JP)
(74) Representative: Paget, Hugh Charles Edward

(57) **Abstract**

A recyclable glass bottle having a colored coating film formed thereon whose thickness is 0.5 to 7µm is obtained by coating the outer surface of a colorless glass bottle with a resin coating solution containing a microparticulate colorant having a mean particle size of 0.01 to 0.2µm dispersed uniformly together with a dispersant in a synthetic resin emulsion and then curing by heating.

## Description

### FIELD OF THE INVENTION

The present invention relates to a resin film-coated recyclable glass bottle suitable to be recycled and a method for producing the same.

### PRIOR ART

A glass bottle whose outer surface is covered with a resin coating film for the purpose of avoiding any scratch during shipping or handling has widely been known. Recently, a glass bottle which looks like one made from a colored glass but which is produced actually by forming a colored resin coating film on the outer surface of the glass bottle has been also proposed. On the other hand, a glass bottle is advantageous because of its ability of being used again as a raw glass material by being recycled after use, and a resin film-coated glass bottle described above is also subjected to such recycling.

However, a resin film-coated glass bottle allows a carbon component in the coating film to elicit a reducing effect when being recycled as a raw glass material, which leads to a development for example of a blue color due to the conversion from Fe³⁺ to Fe²⁺ in the glass. As a result, a use of a recyclable glass bottle having a resin coating film as a raw glass material again poses a limitation of the amount to be used to an extent showing no such reducing effect, but it is problematically infeasible to isolate the fragments of film-coated glass bottles exclusively from a mixture of various types of the glass fragments. In addition, an attempt to decreasing the amount of a carbon component in a coating film by decreasing the film thickness for the purpose of suppressing the reducing effect was also problematic since it resulted in a poor adhesion and a poor scratch resistance as well as a difficulty in obtaining an intended color effect due to the limited amount of the colorant to be incorporated.

Accordingly, an objective of the invention is to provide a resin film-coated recyclable glass bottle which has a sufficient scratch resistance in spite of a thinness of a resin coating film on the outer surface, which can be used again as a glass caret for a colorless glass because of an only slight reducing effect when recycled as a raw material due to the thinness of the film, and which restores a sufficient coloring effect of the resin coating film, as well as a method for producing the same.

### SUMMARY OF THE INVENTION

A resin film-coated recyclable glass bottle according to the invention established for solving the problems described above is a recyclable glass bottle having a resin coating film which is obtained by coating the outer surface of a colorless glass bottle with a resin coating solution containing a microparticulate colorant having a mean particle size of 0.01 to 0.2 µm dispersed uniformly with a dispersant in a synthetic resin emulsion to form a colored coating film having a film thickness of 0.5 to 7 µm.

A method for producing a resin film-coated recyclable glass bottle according to the invention is a method for producing a recyclable glass bottle having a resin coating film comprising coating the outer surface of a colorless glass bottle with a resin coating solution containing a microparticulate colorant having a mean particle size of 0.01 to 0.2 µm dispersed uniformly in a synthetic resin emulsion and then curing by heating briefly to form a colored coating film having a film thickness of 0.5 to 7 µm.

According to the invention, a resin film-coated recyclable glass bottle which has a sufficient scratch resistance due to a resin coating film on the outer surface, which shows a minimized reducing effect when recycled as a raw glass material due to the thinness of the film, and which restores a sufficient coloring effect of the resin coating film can be provided.

### BRIEF DESCRIPTION OF THE DRAWING

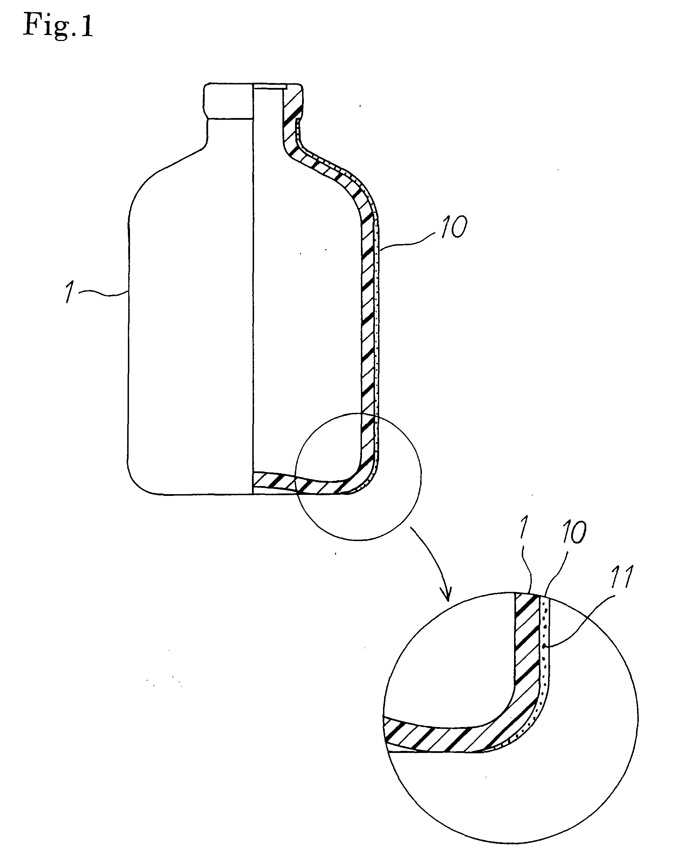

Figure 1 shows a partial sectional view of a recyclable glass bottle of one embodiment of the invention.

### DESCRIPTION OF THE PREFERRED EMBODIMENTS

Preferred embodiments of the invention is described below.

The recyclable glass bottle of the invention shown in Figure 1 consists of a colorless transparent glass bottle 1, the outer surface of which is provided with a colored coating film 10, thus appearing just like a colored glass bottle. After being used, this recyclable glass bottle is returned from an user and re-used as a glass caret. The film thickness of colored coating film 10 ranges from 0.5 to 7 µm, and contains microparticulate colorant 11 having a mean particle size of 0.01 to 0.2 µm dispersed therein uniformly. This colored coating film 10 is formed by coating the outer surface of colorless transparent glass bottle 1 with a resin coating solution obtained by dispersing microparticulate colorant 11 uniformly in a synthetic resin emulsion followed by curing by heating briefly.

A resin coating solution to be applied onto the outer surface of glass bottle 1 is produced by dispersing a microparticulate colorant having a mean particle size of 0.01 to 0.2 µm uniformly in a synthetic resin emulsion. Such synthetic resin emulsion may be a emulsion of one or more synthetic resins selected from polyethylene, polypropylene, polyester, polyurethane, vinyl chloride resin, acryl resin, epoxy resin and ionomer resin, among which polyurethane be preferred for the purpose of ensuring a sufficient scratch resistance only with a thin film.

Colorant 11 is a microparticle having a mean particle size of 0.01 to 0.2 µm. While an organic pigment, for example, generally employed has a particle size of 2 to 3 µm, the present invention requires a particle size which is of a microparticle in order to allow a large amount of the particle to be present in the coating film which is required for exerting a sufficient coloring effect even at a reduced thickness of the coating film. Accordingly, the mean particle size of the colorant should be at a microparticulate level of 0.01 to 0.2 µm. A mean particle size less than 0.01 µm may lead to an undesirable formation of a secondary particle as well as an increased cost, while one exceeding 0.2 µm leads to a difficulty in accomplishing a sufficient coloring, and thus the range specified above is applicable and the range of 0.07 to 0.1 µm is preferred. The particle size of colorant 11 in coating film 10 described above can be verified for example by an electron microscope.

A colorant may for example be an organic pigment such as an azo-based pigment or a fluorocyanine-based or quinacridone-based polycyclic pigment, and a mixture of an organic pigment with 50 % or less of a dye may also be employed.

In addition to a colorant described above, a frosting agent consisting of a silica-based frosting agent whose particle size is 2 to 3 µm can be employed, and in such case a colored frost-like resin coating film is obtained. The amount of such frosting agent is 5 to 25 %, preferably 10 to 15 % based on 100 % of the coating solution.

In order to disperse and stabilize a colorant uniformly in a resin coating solution, it is preferred to add a dispersant, such as a carboxylic acid-type polymeric material or a fluorinated alkylester-based material as well as a polymer-modified polyester/butyl acetate and the like. Furthermore, a triazine-based or benzophenone-based organic UV absorber may also be added if necessary.

As described above, a resin coating solution in the invention is applied onto the outer surface of colorless glass bottle 1 to form colored coating film 10 whose thickness is 0.5 to 7 µm. This film thickness ranging from 0. 5 to 7 µm is specified based on the reason that a thickness less than 0.5 µm leads to a difficulty in exerting a sufficient scratch resistance while a thickness exceeding 7 µm may leads to a problematic reducing effect of a carbon from the resin when recycled as a raw material caret. While colored coating film 10 may be formed all over the outer surface of glass bottle 1, it is formed preferably only over the shoulder and the body excluding the bottom for the purpose of reducing the resin consumption as well as in view of the producibility.

A recyclable glass bottle described above can be produced by coating the outer surface of colorless glass bottle 1 with a resin coating solution containing a microparticulate colorant having a mean particle size of 0.01 to 0.2 µm dispersed uniformly in a synthetic resin emulsion and then curing by heating (at 160 to 200°C, preferably 170 to 180°C) briefly for 5 to 20 minutes to form a colored coating film having a film thickness of 0.5 to 7 µm.

A method for forming a coating film may be a conventional ordinary coating method such as dipping, spraying, brush painting, showering or curtain flow method.

A resin film-coated recyclable glass bottle according to the invention has a sufficient scratch resistance as evident from the data represented in Examples described below. In addition, its extremely thin film thickness when compared with a conventional resin-coated bottle whose film thickness is 20 µm or more serves to minimize the reducing effect of a carbon component in the resin coating film when it is recycled as a raw glass material, thus being suitable to be recycled. Furthermore, the thinness of the coating film serves to reduce the drying/curing time, whereby improving the producibility and decreasing the cost.

### EXAMPLES

### EXAMPLE 1

100 Parts by weight of a polyurethane resin was combined with 6 % of a silane coupling agent diluted at 2.5 % with water, stirred, further combined with 2 % of a silicon oil as a lubricant and also with 2 % of phthalocyanine blue as an organic blue pigment (mean particle size: 0.05 µm) which was mixed and dispersed to form a urethane-based colored coating solution. In this coating solution, a 300 mL colorless transparent glass bottle was dipped and taken out at 100 mm/sec to allow the outer surface of the glass bottle to be coated entirely with the urethane-based colored coating solution, which was then cured at 170°C for 20 minutes to obtain a blue-colored resin film-coated recyclable glass bottle.

### [Film thickness]

The outer surface of the resin film-coated recyclable glass bottle obtained was cut by a cutter knife and the thickness of the coating film was determined using a surface roughness meter called SURFCOM 554A manufactured by TOKYOSEIMITSUSHA. The results shown in Table 1 revealed the thin film having a thickness of 2 to 4 µm, which was within the range giving no reducing effect of carbon when the recyclable glass bottle is reused as a raw material caret.

**[Table 1]**

| | Height from bottom (mm) | | | |
|---|---|---|---|---|
| | 10 | 30 | 50 | 70 |
| Film thickness (µm) | 4 | 3.8 | 3 | 2.2 |

### [Alkali resistance]

The resin film-coated recyclable glass bottle obtained was dipped continuously in a 3.5% NaOH solution at 70°C to examine the change in the coating film, and the results are shown in Table 2, in which ○ denotes no change while Δ denotes a slight whitening. No effect was observed over 4 hours, revealing the ability of being subjected satisfactorily to a practical use.

**[Table 2]**

| | Dipping time period (hr) | | | | |
|---|---|---|---|---|---|
| | 1 | 2 | 3 | 4 | 5 |
| Condition of film | ○ | ○ | ○ | ○ | Δ |

### [Vibration test]

The resin film-coated recyclable glass bottle obtained was placed in a cardboard box for 24 bottles having board-partitioned 4 x 6 compartments tailored therefor, which was then vibrated continuously with the vertical amplitude of 20 mm at the frequency of 270 cycles per minute and the results are shown in Table 3. 40-Minute continuous vibration resulted in no apparent scratch, revealing that the coating film was resistant sufficiently to the shipping.

**[Table 3]**

| | Time period (min) | |
|---|---|---|
| | 20 | 40 |
| Film appearance | No scratch | No scratch |

### [Line simulation test]

A damaging machine known as a line simulator manufactured by AGR was used to examine the way of receiving scratch, and the results are shown in Table 4. The damaging for 1 minute is estimated to give the corresponding scratch in one commercial use, and this test revealed that the recyclable glass bottle of the invention, which is intended mainly to be a one-way bottle, had a sufficient scratch resistance.

**[Table 4]**

| | Time period (min) | | | |
|---|---|---|---|---|
| | 1 | 2 | 3 | 4 |
| Film appearance | No scratch or tear | No scratch or tear | Slight scratch and no tear | Slight scratch and slight tear |

### [Scratch force test]

The bottles were stacked alternatively at the angle of 90° and scratched under a load from the top to examine the load at which the bottles were scratched. The results which are shown in Table 5 indicated that the coating film of the invention had a highly close adhesion and a low friction coefficient and thus can sufficiently be employed practically.

**[Table 5]**

| | Load (kgf) | | |
|---|---|---|---|
| | 5 | 10 | 15 |
| Condition of film | No peeling or scratch | No peeling or scratch | No peeling or scratch |

### Example 2

The coating solution prepared in Example 1 (but this time using a red organic pigment dimethylquinacridone as a colorant) was supplemented with 10 % of a frosting agent 2 µm in particle size in addition to the colorant to prepare a frost coating solution, which was processed similarly to obtain a frost-like resin coating film. The thickness of the coating film obtained was determined similarly to Example 1 and the results are shown in Table 6.

**[Table 6]**

| | Distance from bottom (mm) | | | |
|---|---|---|---|---|
| | 10 | 30 | 50 | 70 |
| Film thickness (µm) | 5 | 4.8 | 4.5 | 4.5 |

### [Hot water resistance]

The resin film-coated recyclable glass bottle obtained was dipped continuously in a hot water at 80°C to observe the change in the appearance, and the results shown in Table 7 indicated that it had a sufficient resistance to the hot water.

**[Table 7]**

| | Time period (min) | | | |
|---|---|---|---|---|
| | 10 | 20 | 30 | 60 |
| Film appearance | No change | No change | No change | No change |

## Claims

1. A recyclable glass bottle having a resin coating film which is obtained by coating the outer surface of a colorless glass bottle with a resin coating solution containing a microparticulate colorant having a mean particle size of 0.01 to 0.2 µm dispersed uniformly in a synthetic resin emulsion to form a colored coating film having a film thickness of 0.5 to 7 µm.

2. A recyclable glass bottle having a resin coating film according to Claim 1 wherein the synthetic resin emulsion is a synthetic resin emulsion selected from polyethylene, polypropylene, polyester, polyurethane, vinyl chloride resin, acryl resin, epoxy resin and ionomer resin.

3. A recyclable glass bottle having a resin coating film according to Claim 1 or 2 wherein an organic pigment is employed as a colorant.

4. A recyclable glass bottle having a resin coating film according to Claim 1 or 2 wherein a mixture of an organic pigment and a dye is employed as a colorant.

5. A recyclable glass bottle having a resin coating film according to any of Claims 1 to 4 wherein a silica-based frosting agent is employed in addition to a colorant to form a frost-like colored coating film.

6. A recyclable glass bottle having a resin coating film according to any of Claims 1 to 5 wherein the resin coating film is formed entirely over the outer surface except for the bottom of the glass bottle.

7. A method for producing a recyclable glass bottle having a resin coating film comprising coating the outer surface of a colorless glass bottle with a resin coating solution containing a microparticulate colorant having a mean particle size of 0.01 to 0.2 µm dispersed uniformly in a synthetic resin emulsion and then curing by heating briefly to form a colored coating film having a film thickness of 0.5 to 7 µm.
